(19) Europäisches Patentamt
European Patent Office
Office européen des brevets

(11) EP 4 760 801 A1

(12) EUROPEAN PATENT APPLICATION

(43) Date of publication:
17.06.2026 Bulletin 2026/25

(21) Application number: 25220787.3

(22) Date of filing: 04.12.2025

(51) International Patent Classification (IPC):
$H01M\ 4/133^{(2010.01)}$   $H01M\ 4/134^{(2010.01)}$
$H01M\ 4/36^{(2006.01)}$   $H01M\ 4/38^{(2006.01)}$
$H01M\ 4/50^{(2010.01)}$   $H01M\ 4/587^{(2010.01)}$
$H01M\ 10/052^{(2010.01)}$

(52) Cooperative Patent Classification (CPC):
H01M 4/133; H01M 4/134; H01M 4/366;
H01M 4/386; H01M 4/502; H01M 4/587;
H01M 10/052; H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 11.12.2024 KR 20240184218
13.10.2025 KR 20250147034

(71) Applicant: SK On Co., Ltd.
Seoul 03161 (KR)

(72) Inventors:
• CHUNG, Da Bin
34124 Daejeon (KR)
• KIM, Moon Sung
34124 Daejeon (KR)
• YOOK, Seung Hyun
34124 Daejeon (KR)
• CHOI, Seung Ryul
34124 Daejeon (KR)

(74) Representative: Prüfer & Partner mbB
Patentanwälte · Rechtsanwälte
Sohnckestraße 12
81479 München (DE)

(54) ANODE FOR LITHIUM SECONDARY BATTERY AND LITHIUM SECONDARY BATTERY INCLUDING THE SAME

(57) An anode for a lithium secondary battery according to embodiments of the present disclosure includes: an anode current collector; and an anode active material layer disposed on at least one surface of the anode current collector, wherein the anode active material layer includes a first anode active material layer and a second anode active material layer disposed on the first anode active material layer, and the diffusivity (D) of the entire anode active material layer obtained through X-ray microscopy (XRM) analysis is 4.6% to 5.8%.

[FIG. 1]

**Description**

[BACKGROUND OF THE INVENTION]

1. Field of the Invention

The present application relates to an anode for a lithium secondary battery, and a lithium secondary battery including the same.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

For example, a lithium secondary battery includes a plurality of secondary battery cells, each of which includes an electrode assembly having a cathode, an anode and a separation membrane (separator). Heat may be generated in the electrode assembly during repeated charging and discharging. This heat may cause the temperature inside the electrode assembly to rise, causing shrinkage of the separator and resulting in a short circuit between the cathode and the anode.

In addition, if the above-described short circuit due to heat is repeated, ignition may occur as a result of thermal runaway of the secondary battery cell.

[SUMMARY OF THE INVENTION]

An object of the present disclosure is to provide an anode for a lithium secondary battery having improved operating stability, reliability, and output characteristics.

Another object of the present disclosure is to provide a lithium secondary battery having improved operating stability, reliability, and output characteristics.

According to exemplary embodiments of the present disclosure, there is provided an anode for a lithium secondary battery including: an anode current collector; and an anode active material layer disposed on at least one surface of the anode current collector, wherein the anode active material layer includes a first anode active material layer and a second anode active material layer disposed on the first anode active material layer, and the diffusivity (D) of the entire anode active material layer obtained through X-ray microscopy (XRM) analysis is 4.6% to 5.8%.

In some embodiments, the diffusivity (D) may be defined by Equation 1 below.

[Equation 1]

$$\text{Diffusivity (D) of anode active material layer} = P \times \left(\frac{L_t}{L_P}\right)$$

In Equation 1, P may denote the porosity of the anode active material layer, $L_t$ may denote the thickness of the anode active material layer, and $L_p$ may denote the average flow path length through which lithium ions pass when permeating the anode active material layer in the thickness direction.

In some embodiments, the ratio of the diffusivity ($D_2$) of the second anode active material layer to the diffusivity ($D_1$) of the first anode active material layer may be 1.50 or more.

In some embodiments, $D_1$ may be 2.0% or more, and $D_2$ may be 4.0% or more.

In some embodiments, $D_1$ may be 2.5% to 5.0%, and $D_2$ may be 4.0% to 8.0%.

In some embodiments, the porosity of the first anode active material layer may be smaller than the porosity of the second anode active material layer.

In some embodiments, the ratio of the porosity of the second anode active material layer to the porosity of the first anode active material layer may be 1.35 to 1.45.

In some embodiments, the porosity of the first anode active material layer may be 15% to 20%, and the porosity of the second anode active material layer may be 24% to 30%.

In some embodiments, the ratio of the loading amount of the second anode active material layer to the loading amount of the first anode active material layer may be 0.4 to 1.0.

In some embodiments, the first anode active material layer may include a first anode active material and the second anode active material layer may include a second anode active material, and the first anode active material may include first artificial graphite in the form of single particles, and the second anode active material may include second artificial graphite formed by agglomeration of a plurality of sub-particles.

In some embodiments, the first artificial graphite may have a specific surface area of 0.50 m$^2$/g to 2.50 m$^2$/g, and the second artificial graphite may have a specific surface area of 0.90 m$^2$/g to 2.00 m$^2$/g.

In some embodiments, the ratio of the median particle diameter (D$_{50}$) of the second artificial graphite to the median particle diameter (D$_{50}$) of the first artificial graphite may be 1.1 to 3.0.

In some embodiments, the first artificial graphite may have a median particle diameter (D$_{50}$) of 5 $\mu$m to 15 $\mu$m, and the second artificial graphite may have a median particle diameter (D$_{50}$) of 10 $\mu$m to 20 $\mu$m.

In some embodiments, the first anode active material may further include a first silicon-based active material and the second anode active material may further include a second silicon-based active material, and the first and second silicon-based active materials may be selected from the group consisting of Si, SiOx (0<x$\leq$2), metal-doped SiOx (0<x$\leq$2), and a silicon-carbon composite.

In some embodiments, the content of the first artificial graphite may be 85% by weight to 95% by weight and the content of the first silicon-based active material may be 1% by weight to 10% by weight, based on the total weight of the first anode active material.

In some embodiments, the content of the second artificial graphite may be 80% by weight to 95% by weight and the content of the second silicon-based active material may be 5% by weight to 20% by weight, based on the total weight of the second anode active material.

In some embodiments, the weight ratio of the first silicon-based active material to the first artificial graphite may be 0.05 to 0.15.

In some embodiments, the weight ratio of the second silicon-based active material to the second artificial graphite may be 0.06 to 0.2.

According to exemplary embodiments of the present disclosure, there is provided a lithium secondary battery including: the above-described anode; and a cathode disposed opposite to the anode.

The anode for a lithium secondary battery according to embodiments of the present disclosure may have high output characteristics and may suppress heat transfer when a micro-short circuit occurs.

The lithium secondary battery according to embodiments of the present disclosure may suppress internal heat accumulation during repeated charging and discharging. Accordingly, deformation of the structure may be reduced, thereby delaying the progression from the occurrence of a micro-short circuit to a complete short circuit. In addition, the lithium secondary battery may mitigate or suppress thermal runaway when heat generation or flame occurs inside the cell.

The anode for a lithium secondary battery according to the present disclosure and the lithium secondary battery including the same may be widely applied in green technology fields, such as electric vehicles, battery charging stations, as well as solar power generation, wind power generation, and the like, which use the batteries. The anode for a lithium secondary battery according to the present disclosure and the lithium secondary battery including the same may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and advantages of the present disclosure will be more clearly understood from the following detailed description taken in conjunction with the accompanying drawings, in which:

FIG. 1 is a schematic cross-sectional view illustrating an anode for a lithium secondary battery according to exemplary embodiments;
FIG. 2 is a schematic plan view illustrating a lithium secondary battery according to exemplary embodiments; and
FIG. 3 is a schematic cross-sectional view illustrating a lithium secondary battery according to exemplary embodiments.

[DETAILED DESCRIPTION OF THE INVENTION]

Hereinafter, exemplary embodiments of the present disclosure will be described in detail with reference to the drawings so that persons of ordinary knowledge in the technical field to which the present invention pertains may easily implement the present invention.

**<Anode for a lithium secondary battery>**

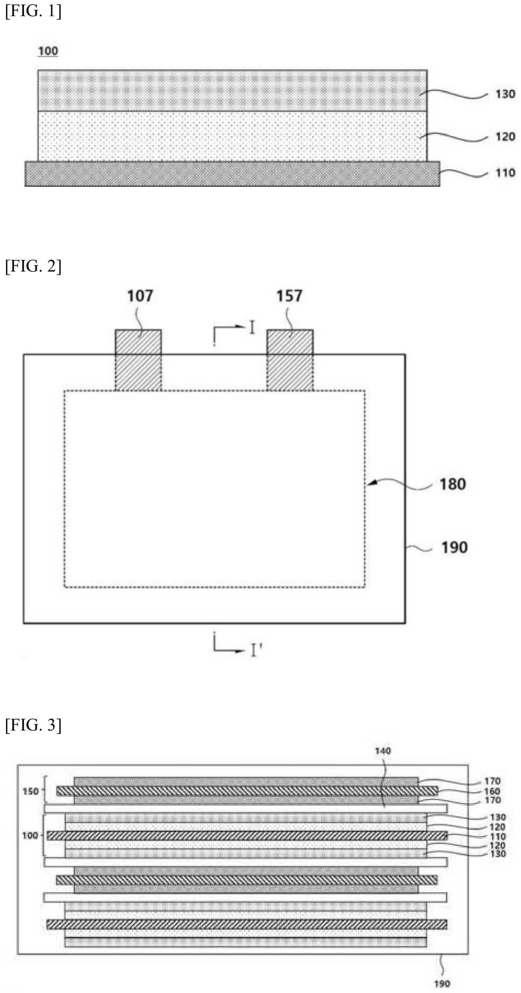

FIG. 1 is a schematic cross-sectional view illustrating an anode 100 for a lithium secondary battery according to exemplary embodiments.

The anode 100 for a lithium secondary battery according to exemplary embodiments of the present disclosure includes: an anode current collector 110; and an anode active material layer disposed on at least one surface of the anode current collector 110, wherein the anode active material layer includes a first anode active material layer 120 and a second anode active material layer 130 disposed on the first anode active material layer 120, and the diffusivity (D) of the entire anode active material layer obtained through X-ray microscopy (XRM) analysis is 4.6% to 5.8%.

The diffusivity (D) may be defined by Equation 1 below.

[Equation 1]

$$\text{Diffusivity (D) of anode active material layer} = P \times \left(\frac{L_t}{L_P}\right)$$

In Equation 1, P denotes the porosity of the anode active material layer, $L_t$ denotes the thickness of the anode active material layer, and $L_p$ denotes the average flow path length through which lithium ions pass when permeating the anode active material layer in the thickness direction. For example, the unit of P may be expressed as %, and the units of Lt and Lp may be, for example, expressed in $\mu$m. However, these units are merely illustrative, and the present application is not limited thereto.

The porosity may indicate the ratio of internal void volume to the total volume of the active material layer. As a non-limiting example, the porosity may be measured by a pore structure analysis method such as the Brunauer-Emmett-Teller (BET) method or mercury intrusion porosimetry (Hg intrusion method), or may be calculated by analyzing cross-sectional images obtained with a scanning electron microscope (SEM) using image analysis software.

$L_p$ may indicate, for example, the average distance of a path formed by interconnected pores within the anode active material layer in the thickness direction of the anode active material layer. The thickness direction may mean a direction extending from the anode current collector 110 toward the surface of the anode active material layer, and may represent the thickness direction of each of the anode current collector 110, the first anode active material layer 120, and the second anode active material layer 130, or the direction in which the anode current collector 110, the first anode active material layer 120, and the second anode active material layer 130 are stacked. The thickness direction may, for example, form an angle of 80° to 90° with respect to the interface between the anode current collector 110 and the anode active material layer, and may mean, for example, a direction perpendicular to the interface.

The diffusivity (D) of the anode active material layer may represent the diffusivity of the entire anode active material layer including the first anode active material layer 120 and the second anode active material layer 130.

The diffusivity (D) of the anode active material layer may be calculated, for example, on the basis of a case where a liquid permeates the entire anode active material layer in the thickness direction. The liquid may be an electrolyte of a lithium secondary battery, for example, an electrolyte containing lithium ions, such as a 1 mol/L $LiPF_6$ solution prepared using a solvent in which ethylene carbonate (EC) and dimethyl carbonate (DMC) are mixed at a volume ratio of 1:1.

The diffusivity (D) of the anode active material layer may be controlled by various process conditions, such as the loading ratio of each anode active material layer, the type and content of components included therein, physical properties such as median particle diameter and porosity, the mixing time of the anode active material slurry, and whether magnetic alignment is induced by applying a magnetic field.

The diffusivity (D) of the anode active material layer may be automatically calculated by capturing a 3D image of the "anode active material layer to be measured" formed on the anode current collector 110 using a device equipped with an X-ray source, and by analyzing the captured 3D image with 3D image analysis software.

As a non-limiting example, the device equipped with an X-ray source may be a 3D X-ray microscope, such as Zeiss Xradia 620 Versa (Zeiss) or Zeiss Xradia 520 Versa (Zeiss). The 3D X-ray microscopy may be performed under conditions including an acceleration voltage of 30 to 90 kV, a power of 3.0 to 5.0 W, and a voxel size of 300 to 400 nm.

As a non-limiting example, the software for 3D image analysis may include GeoDict Software (Math2Market), etc.

Three-dimensional structural images of the anode active material layer may be obtained using the 3D X-ray microscope, and 3D rendering may then be applied to the obtained images to generate 3D modeling images representing the internal structure of the anode active material layer.

The diffusivity (D) of the anode active material layer may be automatically calculated using the DiffuDict module function included in the 3D image analysis software (GeoDict Software, Math2Market). In the 3D image analysis software, the computation direction of the percolation path may be set to the Z-direction (thickness direction), and the DiffuDict module function may be executed.

In the anode 100 for a lithium secondary battery according to embodiments of the present disclosure, the diffusivity (D) of the entire anode active material layer obtained through X-ray microscopy (XRM) analysis may be 4.6% to 5.8%.

Accordingly, in a lithium secondary battery including the anode 100 for a lithium secondary battery, the structure of the anode 100 may be stably maintained even after repeated charging and discharging, thereby improving output and capacity characteristics. In addition, when a micro-short circuit occurs in the lithium secondary battery, heat transfer may be suppressed, thereby delaying the time until a complete short circuit occurs. Furthermore, when flame generation occurs, the flame propagation rate may be reduced, and an increase in internal pressure may be alleviated.

In some embodiments, the diffusivity (D) of the anode active material layer may be, for example, 5.0% to 5.8%, or 5.1% to 5.7%. Accordingly, the anode 100 may suppress or reduce a decrease in battery capacity even when the charging rate increases, and may further delay the progression of thermal runaway, thereby improving the overall safety of the cell and battery pack.

In some embodiments, the anode active material layer may have a porosity (P) of, for example, 20% to 30%.

In some embodiments, the entire anode active material layer may have a thickness (Lt) of, for example, 100 $\mu$m to 200 $\mu$m or 125 $\mu$m to 140 $\mu$m.

In some embodiments, the anode active material layer may include: the first anode active material layer 120 disposed on at least one surface of the anode current collector 110 and including a first anode active material; and the second anode active material layer 130 disposed on the first anode active material layer 120 and including a second anode active material. The anode 100 for a lithium secondary battery may have, for example, a stacked structure in which the anode current collector 110, the first anode active material layer 120, and the second anode active material layer 130 are sequentially stacked.

The first anode active material may include first artificial graphite in the form of single particles, and the second anode active material may include second artificial graphite formed by agglomeration of a plurality of sub-particles.

The first artificial graphite may refer to, for example, primary particles that have not undergone a separate assembly process.

The second artificial graphite may be an aggregate formed by agglomeration of a plurality of sub-particles, and the plurality of sub-particles may integrally form a single secondary particle. Chemical bonds may be formed between the plurality of sub-particles, and the boundaries therebetween may not be clearly distinguishable; however, the number of sub-particles may be inversely calculated based on the number of crosslinking sites formed between them. The second artificial graphite may be an aggregate formed by the assembly of three or more, five or more, or seven or more sub-particles, for example. The aggregate may be, for example, spherical in shape.

In some embodiments, the first anode active material may exclude artificial graphite in an assembled form, and the second anode active material may exclude artificial graphite in the form of single particles.

In some embodiments, the ratio ($D_2/D_1$) of the diffusivity ($D_1$) of the first anode active material layer 120 to the diffusivity ($D_2$) of the second anode active material layer 130 may be 1.50 or more.

Accordingly, performance degradation of the anode 100 for a lithium secondary battery may be more effectively suppressed during fast charging and discharging of the lithium secondary battery. In addition, the time from the occurrence of a micro-short circuit to a complete short circuit in the lithium secondary battery may be further extended. For example, the time point at which the micro-short circuit occurs may refer to the point where the voltage begins to rapidly drop to 0.011 V or higher in a thermal runaway experiment in which the voltage is continuously measured.

$D_1$ may be defined according to Equation 1 described above. In this case, in Equation 1, the porosity ($P_1$) of the first anode active material layer 120 is applied to the parameter P, the thickness ($L_{t1}$) of the first anode active material layer 120 is applied to the parameter $L_t$, and the average flow path length ($L_{p1}$) through which lithium ions pass when permeating the first anode active material layer 120 in the thickness direction is applied to the parameter $L_p$.

$D_2$ may be also defined according to Equation 1 described above. In this case, in Equation 1, the porosity ($P_2$) of the second anode active material layer 130 is applied to the parameter P, the thickness ($L_{t2}$) of the second anode active material layer 130 is applied to the parameter $L_t$, and the average flow path length ($L_{p2}$) through which lithium ions pass when permeating the second anode active material layer 130 in the thickness direction is applied to the parameter $L_p$.

$D_1$ and $D_2$ may be automatically calculated, for example, by separating the anode active material layer from the anode 100 for a lithium secondary battery, then separating the first anode active material layer 120 and the second anode active material layer 130 from the separated anode active material layer, taking 3D images of each of the separated first anode active material layer 120 and the second anode active material layer 130 using a device equipped with an X-ray source, and performing analysis on the captured 3D images using 3D image analysis software. In addition, $D_1$ and $D_2$ may be obtained by analyzing each of a first laminate having the first anode active material layer 120 formed on the anode current collector and a second laminate having the second anode active material layer 130 formed on the anode current collector. Reference is made to the above description for the details of the analysis.

The ratio of $D_2/D_1$ may be, for example, 1.50 to 2.50, 1.70 to 2.50, or 1.70 to 2.10. Within this range, the thermal stability of the anode 100 for a lithium secondary battery may be secured, thereby maintaining the stability of a lithium secondary battery including the anode, while an increase in resistance at the anode interface during fast charging may be suppressed or reduced, thereby improving the capacity retention and further enhancing the long-term cycle life.

In some embodiments, the diffusivity ($D_1$) of the first anode active material layer 120 may be 2.0% or more. $D_1$ may be, for example, 2.5% to 5.0%, 2.7% to 4.5%, or 3.2% to 4.2%. Accordingly, the anode 100 for a lithium secondary battery may achieve stable capacity performance even after repeated charging and discharging of the lithium secondary battery. Additionally, the propagation of heat or flame within the lithium secondary battery may be further mitigated or suppressed, and an increase in internal pressure may be further alleviated.

In some embodiments, the diffusivity ($D_2$) of the second anode active material layer 130 may be 4.0% or more. $D_2$ may be, for example, 4.0% to 8.0%, 4.5% to 8.0%, 5.1% to 7.5%, or 6.4% to 7.4%. Accordingly, the output and capacity characteristics of the anode 100 for a lithium secondary battery may be further improved.

In some embodiments, the porosity of the first anode active material layer 120 may be smaller than that of the second anode active material layer 130. Accordingly, the output characteristics and high-temperature stability of the anode 100 and the lithium secondary battery including the same may be improved.

In some embodiments, the ratio of the porosity of the second anode active material layer 130 to the porosity of the first anode active material layer 120 may be 1.35 to 1.45. Accordingly, the output characteristics and high-temperature stability of the anode 100 and the lithium secondary battery including the same may be further improved.

In some embodiments, the porosity of the first anode active material layer 120 may be 15% to 20%, and the porosity of the second anode active material layer 130 may be 24% to 30%. Accordingly, the output characteristics and high-temperature stability of the anode 100 and the lithium secondary battery including the same may be further improved.

In some embodiments, the first artificial graphite may have a specific surface area of 0.50 $m^2$/g to 2.50 $m^2$/g, or 1.00 $m^2$/g to 1.52 $m^2$/g. Accordingly, the adhesion of the first anode active material layer 120 to the anode current collector 110 may be further improved, and thermal conduction within the anode 100 for a lithium secondary battery may be further alleviated.

In some embodiments, the second artificial graphite may have a specific surface area of 0.90 $m^2$/g to 2.00 $m^2$/g, or 1.00 $m^2$/g to 1.50 $m^2$/g. Accordingly, the output characteristics of the anode 100 for a lithium secondary battery may be further improved.

In some embodiments, the ratio of the median particle diameter ($D_{50}$) of the second artificial graphite to the median particle diameter ($D_{50}$) of the first artificial graphite may be, for example, 1.1 to 3.0, or 1.2 to 2.0. Accordingly, the internal pressure may be maintained at a further reduced level when a flame occurs in a secondary battery using the anode 100 for a lithium secondary battery.

The above-described median particle diameter ($D_{50}$) refers to the particle diameter corresponding to a 50% cumulative volume distribution in the particle size distribution curve. The median particle diameter ($D_{50}$) may be measured, for example, using a laser diffraction method.

In some embodiments, the first artificial graphite may have a median particle diameter ($D_{50}$) of, for example, 5 $\mu$m to 15 $\mu$m, 6 $\mu$m to 14 $\mu$m, or 7 $\mu$m to 10 $\mu$m. Accordingly, the capacity characteristics of the anode 100 for a lithium secondary battery may be further improved. Furthermore, structural deformation in a secondary battery to which the anode 100 for a lithium secondary battery is applied may be further suppressed.

In some embodiments, the second artificial graphite may have a median particle diameter ($D_{50}$) of, for example, 10 $\mu$m to 20 $\mu$m, 11 $\mu$m to 18 $\mu$m, or 12 $\mu$m to 16 $\mu$m. Accordingly, the anode 100 for a lithium secondary battery may further mitigate capacity degradation during fast charging and discharging. In addition, heat or flame propagation may be further mitigated when a flame occurs in a lithium secondary battery.

In some embodiments, the content of the first artificial graphite based on the total weight of the first anode active material may be 85% by weight ("wt%") to 95 wt%, or 90 wt% to 95 wt%. Accordingly, the output and capacity characteristics of the anode 100 for a lithium secondary battery may be further improved. In addition, deformation of the anode (100) structure, which may lead to the occurrence of micro-short circuits in the lithium secondary battery, may be further suppressed.

In some embodiments, the content of the second artificial graphite based on the total weight of the second anode active material may be 80 wt% to 95 wt% or 81 wt% to 90 wt%. Accordingly, the anode 100 for a lithium secondary battery may have improved output and capacity characteristics.

In some embodiments, the content of the binder in the first anode active material layer 120 may be 0.2 wt% to 1.0 wt%.

In some embodiments, the content of the binder in the second anode active material layer 130 may be 1.0 wt% to 3.0 wt%.

In some embodiments, at least one of the first anode active material and the second anode active material may further include a silicon-based active material. The silicon-based active material may be selected from the group consisting of, for example, Si, $SiO_x$ ($0 < x \leq 2$), metal-doped $SiO_x$ ($0 < x \leq 2$), and a silicon-carbon composite. The metal may include lithium and/or magnesium, and the metal-doped $SiO_x$ ($0 < x \leq 2$) may include a metal silicate. As a non-limiting example, the silicon-carbon composite may include SiC, and may be a composite in which a silicon coating layer is formed on a porous carbon structure.

The first silicon-based active material and the second silicon-based active material may be identical or different.

In one embodiment, the first and second silicon-based active materials may be $SiO_x$ ($0 < x \leq 2$).

In some embodiments, the first anode active material may include a first silicon-based active material, and the second anode active material may include a second silicon-based active material.

In some embodiments, the content of the first silicon-based active material based on the total weight of the first anode active material may be 1 wt% to 10 wt%.

In some embodiments, the content of the second silicon-based active material based on the total weight of the second anode active material may be 5 wt% to 20 wt%.

In some embodiments, the total content of the first and second silicon-based active materials may be, for example, 1 wt% to 20 wt% based on the total weight of the anode active material layer. The total content of the first and second silicon-based active materials refers to the sum of the content of the first silicon-based active material and the content of the second silicon-based active material.

In some embodiments, the weight ratio of the first silicon-based active material to the first artificial graphite may be, for example, 0.05 to 0.15, for example, 0.05 to 0.12, or 0.05 to 0.08.

In some embodiments, the weight ratio of the second silicon-based active material to the second artificial graphite may be, for example, 0.06 to 0.2, for example, 0.06 to 0.19, 0.06 to 0.18, 0.06 to 0.15, or 0.06 to 0.1.

By adjusting the weight ratio within the above-described range, the output and resistance characteristics of the lithium secondary battery may be sufficiently achieved, while also reducing the maximum pressure during thermal runaway and delaying the time until a complete short circuit occurs.

In some embodiments, the first anode active material layer 120 and the second anode active material layer 130 may each further include at least one of a binder, a conductive material, and a dispersant.

As a non-limiting example, the binder may include an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR). These may be used alone or in combination of two or more thereof. The binder may be used together with a thickener such as carboxymethyl cellulose (CMC).

As a non-limiting example, the conductive material may include, for example, a fibrous conductive material, a particulate conductive material, or both of them. The fibrous conductive material may include, for example, carbon nanotubes (CNTs), and the CNTs may include single-walled carbon nanotubes (SWCNTs), double-walled carbon nanotubes (DWCNTs), multi-walled carbon nanotubes (MWCNTs), rope-shaped carbon nanotubes (rope CNTs) or the like.

The fibrous conductive material may have a length of, for example, 15 to 65 $\mu$m.

The particulate conductive material may include, for example, carbon-based conductive materials such as graphite, carbon black, and graphene; metal-based conductive materials such as tin, tin oxide, titanium oxide, $LaSrCoO_3$, and $LaSrMnO_3$; or a combination thereof.

The particulate conductive material may have a sphericity of, for example, 0.7 to 1, 0.8 to 1, or 0.9 to 1.

In some embodiments, the total content of the first anode active material in the first anode active material layer 120 may be 85 wt% to 97 wt%, or 87.5 wt% to 92.5 wt%.

In some embodiments, the content of the binder in the first anode active material layer 120 may be 0.2 wt% to 1.0 wt%.

As a non-limiting example, the content of the conductive material in the first anode active material layer 120 may be 0.5 wt% to 1.5 wt%.

In some embodiments, the total content of the second anode active material in the second anode active material layer 130 may be 83 wt% to 95.2 wt%, or 87.5 wt% to 92.5 wt%.

In some embodiments, the content of the binder in the second anode active material layer 130 may be 1.0 wt% to 3.0 wt%.

As a non-limiting example, the content of the conductive material in the second anode active material layer 130 may be 0.5 wt% to 1.5 wt%.

In some embodiments, the ratio of the loading amount of the second anode active material layer 130 to the loading amount of the first anode active material layer 120 may be 0.4 to 1, for example, 0.42 to 0.9, or 0.43 to 0.8. Accordingly, the lithium secondary battery has improved output and capacity characteristics, and may prevent thermal runaway.

If the loading ratio is less than 0.4, the output and resistance characteristics of the lithium secondary battery may be relatively improved; however, the maximum pressure during thermal runaway may increase, and the time until a complete short circuit occurs may be shortened. If the loading ratio exceeds 1, the output and resistance characteristics of the lithium secondary battery may be relatively reduced.

As a non-limiting example, the anode current collector 110 may include, for example, copper foil, nickel foil, stainless steel foil, titanium foil, nickel foam, copper foam, a polymer substrate coated with a conductive metal or the like. The anode current collector 110 may have a thickness of, for example, 10 $\mu$m to 50 $\mu$m.

**<Lithium secondary battery>**

FIG. 2 is a schematic plan view illustrating a lithium secondary battery according to exemplary embodiments, and

FIG. 3 is a schematic cross-sectional view illustrating the lithium secondary battery according to exemplary embodiments. FIG. 3 is a cross-sectional view taken along line I-I' of FIG. 2 in the thickness direction.

The lithium secondary battery according to exemplary embodiments includes the above-described anode 100 for a lithium secondary battery, and a cathode 150 disposed opposite to the anode 100. The anode 100 for a lithium secondary battery includes the anode current collector 110; and the above-described anode active material layer disposed on one or both surfaces of the anode current collector 110.

The anode active material layer includes the first anode active material layer 120 and the second anode active material layer 130 disposed on the first anode active material layer 120, and the diffusivity (D) of the entire anode active material layer obtained through X-ray microscopy (XRM) analysis is 4.6% to 5.8%.

Therefore, according to the lithium secondary battery of the exemplary embodiments, the rate of internal heat accumulation during repeated charging and discharging may be reduced, thereby decreasing structural deformation such as shrinkage of a separator 140. In addition, in the lithium secondary battery, the time from the occurrence of a micro-short circuit to a complete short circuit may be delayed, and an increase in internal pressure and thermal runaway when a flame occurs inside the battery may be mitigated or suppressed.

Referring to FIGS. 2 and 3, the lithium secondary battery may include an electrode assembly 180 including the anode 100 and the cathode 150 disposed opposite to the anode 100, and the electrode assembly 180 may be accommodated in a case 190 and impregnated with an electrolyte. For example, the electrode assembly 180 may be accommodated in the case 190 together with an electrolyte solution and thereby impregnated.

The cathode 150 may include a cathode current collector 160 and a cathode active material layer 170 disposed on one or both surfaces of the cathode current collector 160.

The cathode current collector 160 may include stainless steel, nickel, aluminum, titanium, or an alloy thereof. As a non-limiting example, the cathode current collector 160 may include aluminum or stainless steel having a surface treated with carbon, nickel, titanium or silver.

The cathode active material layer 170 may be formed, for example, by applying a cathode active material slurry including at least one of a cathode active material, a binder, a conductive material, a solvent, and a dispersant to one or both surfaces of the cathode current collector 160, followed by drying and roll-pressing, or vacuum drying.

The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Formula 1 below.

[Formula 1] $\quad\quad Li_xNi_{1-y}M_yO_{2+z}$

In Formula 1, x, y and z may satisfy $0.9 \leq x \leq 1.2$, $0 \leq y \leq 0.7$, and $-0.1 \leq z \leq 0.1$. M may represent one or more elements selected from Na, Mg, Ca, Y, Ti, Sr, Hf, V, Nb, Ta, Cr, Mo, W, Mn, Co, Fe, Cu, Ag, Zn, B, Al, Ga, Sn or Zr.

The chemical structure represented by Formula 1 indicates the bonding relationship among elements included in the layered structure or the crystal structure of the cathode active material, for example, the bonding relationship among the main active elements, and does not exclude the presence of other additional elements.

For example, M includes Co and/or Mn, and Co and/or Mn may be included as main active element of the cathode active material together with Ni.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, a non-aqueous solvent may be used as the solvent. As a non-limiting example, N-methyl-2-pyrrolidone (NMP), dimethylformamide, dimethylacetamide, N,N-dimethylaminopropylamine, ethylene oxide, and tetrahydrofuran may be used.

The cathode binder may include an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

The conductive material may refer to the same as described above with respect to the conductive materials included in the first anode active material layer 120 and the second anode active material layer 130.

In exemplary embodiments, the separator 140 may be interposed between the cathode 150 and the anode 100. The separator 140 may be configured to prevent an electrical short-circuit between the cathode 150 and the anode 100, and to allow the flow of ions.

For example, the separator 140 may have a thickness of 10 $\mu$m to 20 $\mu$m.

**For** example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers, etc.

For example, the separator 140 may also include a ceramic-based material. For example, inorganic particles may be coated on the polymer film or dispersed within the polymer film to improve heat resistance.

The separator 140 may have a single-layer or multi-layer structure including the above-described polymer film and/or non-woven fabric.

According to exemplary embodiments, an electrode cell may be defined by the cathode 150, the anode 100 and the separator 140, and a plurality of electrode cells may be stacked to form, for example, a jelly roll type electrode assembly. For example, the electrode assembly may be formed by winding, stacking, z-folding, or stack-folding the separator 140.

The electrode assembly may be accommodated in the case together with the electrolyte to define a lithium secondary battery. According to exemplary embodiments, a non-aqueous electrolyte may be used as the electrolyte. For example, the electrode assembly may be accommodated in the case together with an electrolyte solution.

The non-aqueous electrolyte may include a lithium salt of an electrolyte and an organic solvent. The lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane (DME), tetrahydrofuran (THF), 2-methyltetrahydrofuran, ethyl alcohol, isopropyl alcohol, dimethyl sulfoxide, acetonitrile, diethoxyethane, sulfolane, $\gamma$-butyrolactone, and propylene sulfite may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 150 and the anode 100 in place of the above-described separator 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_3-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In one embodiment, the solid electrolyte may include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIGS. 2 and 3, electrode tabs (cathode tabs and anode tabs) may protrude from the cathode current collector 160 and the anode current collector 110, respectively, which belong to each electrode cell, and may extend to one side of the case 190. The electrode tabs may be welded together with the one side of the case 190 to form electrode leads (a cathode lead 107 and an anode lead 157) that extend or are exposed to the outside of the case 190.

The lithium secondary battery may be manufactured, for example, in a cylindrical shape using a can, a prismatic shape, a pouch shape or a coin shape.

**<Method for manufacturing an anode for a lithium secondary battery>**

The anode 100 for lithium secondary battery according to exemplary embodiments of the present disclosure may be manufactured by a method including, for example, applying an anode slurry to one or both surfaces of the anode current collector 110, followed by drying and roll-pressing to form an anode active material layer.

In some embodiments, the anode 100 for a lithium secondary battery may be manufactured by a method including sequentially applying a first anode slurry and a second anode slurry to one or both surfaces of an anode current collector 110, and drying and/or roll pressing the anode current collector 110 on which the first anode slurry and the second anode slurry are applied in this order.

The manufacturing method may further include, for example, preparing a first anode slurry.

For example, the first anode slurry may be prepared by mixing at least two of a first anode active material including a first artificial graphite and/or a first silicon-based active material, a binder, a conductive material, a solvent, and a dispersant.

The manufacturing method may further include, for example, preparing a second anode slurry.

For example, the second anode slurry may be prepared by mixing at least two of a second anode active material including a second artificial graphite and/or a second silicon-based active material, a binder, a conductive material, a solvent, and a dispersant.

The solvent may be, for example, an aqueous solvent such as water, an aqueous hydrochloric acid solution, or an aqueous sodium hydroxide solution, or a non-aqueous solvent such as N-methyl-2-pyrrolidone (NMP), dimethylformamide, dimethylacetamide, N,N-dimethylaminopropylamine, ethylene oxide, or tetrahydrofuran.

In addition, reference may be made to the above description for details of the first and second anode active materials, the binder, and the conductive material.

For example, the first anode slurry may be prepared by mixing the first anode active material, a binder, a conductive material, solvent, and/or dispersant at a mixing speed of, for example, 200 to 1800 rpm for 1.1 to 4 hours. The mixing may be performed using a milling method such as a ball mill, a bead mill, or a basket mill, but is not limited thereto.

The second anode slurry may be prepared in the same manner as described above for the first anode slurry, except that the second anode active material is mixed. In addition to the first and second anode active materials, the binder and other components included in the first and second anode slurries, or their contents, may be identical or different.

The total solid content of the first and second anode slurries may be, for example, 30 wt% to 60 wt%, or 35 wt% to 50 wt%.

In the manufacturing method, for example, the first and second anode slurries may be sequentially applied and stacked on one or both surfaces of the anode current collector 110 using a double slot die.

In the manufacturing method, for example, the first anode slurry may be applied and dried on one or both surfaces of the anode current collector 110, and the second anode slurry may then be applied and dried on the dried first anode slurry.

The diffusivity (D) of the anode active material layer and the diffusivities ($D_1$ and $D_2$) of the first and second anode active material layers 120 and 130 may be controlled by various process conditions, such as the loading ratio of each anode active material layer, the type and content of components included therein, physical properties such as median particle diameter and porosity, the mixing time of the anode active material slurry, and whether magnetic alignment is induced by applying a magnetic field.

The anode 100 for a lithium secondary battery according to exemplary embodiments of the present disclosure may be manufactured, for example, by the manufacturing method described above.

Hereinafter, the embodiments of the present disclosure will be further described with reference to specific experimental examples.

**Examples and Comparative Examples**

**Manufacture of anode**

Example 1

Preparation of first anode slurry

A first anode slurry was prepared by mixing 87.2 wt% of first artificial graphite in the form of single particles (median particle diameter $D_{50}$: 10.0 $\mu$m; specific surface area: 1.06 $m^2$/g), 10 wt% of silicon oxide ($SiO_2$), 1.2 wt% of CMC, 0.6 wt% of SBR, 1 wt% of multi-walled carbon nanotubes (MWCNTs), and water for 3 hours. The content of each component in the first anode slurry is based on the total solid content. The weight ratio of silicon oxide to the first artificial graphite was 0.11.

Preparation of second anode slurry

A second anode slurry was prepared by mixing 85.4 wt% of second synthetic graphite formed by agglomeration of a plurality of sub-particles (median particle diameter $D_{50}$: 13.5 $\mu$m; specific surface area: 1.4 $m^2$/g), 10 wt% of silicon oxide ($SiO_2$), 1.2 wt% of CMC, 2.4 wt% of SBR, 1 wt% of multi-walled carbon nanotubes (MWCNT), and water for 3 hours. The content of each component in the second anode slurry is based on the total solid content. The weight ratio of silicon oxide to the second synthetic graphite was 0.12.

Formation of first and second anode active material layers

The first anode slurry and second anode slurry were applied to one surface of an anode current collector (copper foil having a thickness of 8 $\mu$m) using a double slot die.
The laminate, in which the first anode slurry and the second anode slurry were sequentially applied to the anode current collector, was dried while being conveyed at a speed of 8 m/min in a drying furnace heated with hot air at 80°C to 100°C, and then roll-pressed to fabricate an anode.
In the fabricated anode, the loading amounts of the first and second anode active material layers were each 5.1 g/$cm^2$, such that the ratio of the second anode active material layer to the first anode active material layer was 1. At this time, the thicknesses of the respective anode active material layers were adjusted so that the ratio of the loading amount of the second anode active material layer to that of the first anode active material layer satisfied 1.

Example 2

An anode for a lithium secondary battery was fabricated under the same conditions and in the same manner as in Example 1, except that the loading amount of the first anode active material layer was 7.14 g/$cm^2$, the loading amount of the second anode active material layer was 3.06 g/$cm^2$, and the ratio of the second anode active material layer to the first anode active material layer was set to 0.43. At this time, the thicknesses of the respective anode active material layers were adjusted so that the ratio of the loading amount of the second anode active material layer to that of the first anode active material layer satisfied 0.43.

Example 3

An anode for a lithium secondary battery was fabricated under the same conditions and in the same manner as in Example 2, except that, in preparing the first anode slurry, 92.2 wt% of first artificial graphite and 5 wt% of silicon oxide ($SiO_2$) were mixed, and in preparing the second anode slurry, 90.4 wt% of second artificial graphite and 5 wt% of silicon oxide ($SiO_2$) were mixed. The weight ratio of silicon oxide to the first artificial graphite was 0.05, and the weight ratio of silicon oxide to the second artificial graphite was 0.06.

Example 4

An anode for a lithium secondary battery was fabricated under the same conditions and in the same manner as in Example 2, except that, in preparing the first anode slurry, 92.2 wt% of first artificial graphite and 5 wt% of silicon oxide ($SiO_2$) were mixed, and in preparing the second anode slurry, 80.4 wt% of second artificial graphite and 15 wt% of silicon oxide ($SiO_2$) were mixed. The weight ratio of silicon oxide to the first artificial graphite was 0.05, and the weight ratio of silicon oxide to the second artificial graphite was 0.19.

Comparative Example 1

An anode for a lithium secondary battery was fabricated under the same conditions and in the same manner as in Example 4, except that the loading amount of the first anode active material layer was 3.06 g/$cm^2$, the loading amount of the second anode active material layer was 7.14 g/$cm^2$, and the ratio of the second anode active material layer to the first anode active material layer was set to 2.33. At this time, the thicknesses of the respective anode active material layers were adjusted so that the ratio of the loading amount of the second anode active material layer to that of the first anode active material layer satisfied 2.33.

Comparative Example 2

An anode for a lithium secondary battery was fabricated under the same conditions and in the same manner as in Example 4, except that the loading amount of the first anode active material layer was 8.16 g/cm$^2$, the loading amount of the second anode active material layer was 2.04 g/cm$^2$, and the ratio of the second anode active material layer to the first anode active material layer was set to 0.25. At this time, the thicknesses of the respective anode active material layers were adjusted so that the ratio of the loading amount of the second anode active material layer to that of the first anode active material layer satisfied 0.25.

Comparative Example 3

**An** anode slurry was prepared by mixing 86.3 wt% of artificial graphite formed by agglomeration of a plurality of sub-particles (median particle diameter $D_{50}$: 13.5 $\mu$m; specific surface area: 1.4 m$^2$/g), 10 wt% of silicon oxide (SiO$_2$), 1.2 wt% of CMC, 1.5 wt% of SBR, 1 wt% of multi-walled carbon nanotubes (MWCNT), and water for 3 hours.
The anode slurry was applied to one surface of an anode current collector (copper foil having a thickness of 8 $\mu$m), and then dried and roll-pressed to form an anode active material layer. The loading amount of the anode active material layer formed as a single layer was 10.2 g/cm$^2$.

Comparative Example 4

An anode slurry was prepared by mixing 86.3 wt% of artificial graphite in the form of single particles (median particle diameter $D_{50}$: 10.0 $\mu$m; specific surface area: 1.06 m$^2$/g), 10 wt% of silicon oxide (SiO$_2$), 1.2 wt% of CMC, 1.5 wt% of SBR, 1 wt% of multi-walled carbon nanotubes (MWCNT), and water for 3 hours.
The anode slurry was applied to one surface of an anode current collector (copper foil having a thickness of 8 $\mu$m), and then dried and roll-pressed to form an anode active material layer. The loading amount of the anode active material layer formed as a single layer was 10.2 g/cm$^2$.

Comparative Example 5

An anode slurry was prepared by mixing 43.15 wt% of artificial graphite in the form of single particles (median particle diameter $D_{50}$: 10 $\mu$m; specific surface area: 1.06 m$^2$/g), 43.15 wt% of artificial graphite formed by agglomeration of a plurality of sub-particles (median particle diameter $D_{50}$: 13.5 $\mu$m; specific surface area: 1.4 m$^2$/g), 10 wt% of silicon oxide (SiO$_2$), 1.2 wt% of CMC, 1.5 wt% of SBR, 1 wt% of multi-walled carbon nanotubes (MWCNTs), and water for 3 hours.
The anode slurry was applied to one surface of an anode current collector (8 $\mu$m thick copper foil), and then dried and roll-pressed to form an anode active material layer. The loading amount of the anode active material layer formed as a single layer was 10.2 g/cm$^2$.

Comparative Example 6

An anode for a lithium secondary battery was fabricated under the same conditions and in the same manner as in Example 2, except that the first anode slurry and the second anode slurry were applied to one surface of an anode current collector (copper foil having a thickness of 8 $\mu$m) using a double slot die, and the laminate, in which the first anode slurry and the second anode slurry were sequentially applied to the anode current collector, was passed between a pair of neodymium magnets spaced 3 cm apart and generating a magnetic field of 4000 Gauss, and a magnetic field was applied thereto, followed by drying and roll-pressing.

Comparative Example 7

An anode for a lithium secondary battery was fabricated under the same conditions and in the same manner as in Example 2, except that the mixing time for the first and second anode slurries was set to 1 hour.

Comparative Example 8

An anode for a lithium secondary battery was fabricated under the same conditions and in the same manner as in Example 1, except that the types of the first and second artificial graphite were interchanged.

Specifically, graphite formed by agglomeration of a plurality of sub-particles (median particle diameter $D_{50}$: 13.5 $\mu$m; specific surface area: 1.4 $m^2$/g) was used as the first artificial graphite, and artificial graphite in the form of single particles (median particle diameter Dso: 10.0 $\mu$m; specific surface area: 1.06 $m^2$/g) was used as the second artificial graphite.

The compositions and process conditions of the anode active material layers of the examples and comparative examples described above are summarized in Table 1 below. In Table 1, the application of a magnetic field is indicated by "O" when the magnetic field was applied and by "X" when it was not applied.

[TABLE 1]

| Examples and Comparative Examples | Electrode structure | Magnetic-field application | Mixing time for each slurry | First anode active material layer | | Second anode active material layer | | Loading ratio ($L_2$/$L_4$) |
|---|---|---|---|---|---|---|---|---|
| | | | | Weight ratio of $SiO_2$ to first artificial graphite | Loading amount ($L_1$) | Weight ratio of $SiO_2$ to second artificial graphite | Loading amount ($L_2$) | |
| Example 1 | Dual | x | 3 hr | 0.11 | 5.1 g/cm$^2$ | 0.12 | 5.1 g/cm$^2$ | 1 |
| Example 2 | Dual | x | 3 hr | 0.11 | 7.14 g/cm$^2$ | 0.12 | 3.06 g/cm$^2$ | 0.43 |
| Example 3 | Dual | x | 3 hr | 0.05 | 7.14 g/cm$^2$ | 0.06 | 3.06 g/cm$^2$ | 0.43 |
| Example 4 | Dual | x | 3 hr | 0.05 | 7.14 g/cm$^2$ | 0.19 | 3.06 g/cm$^2$ | 0.43 |
| Comparative Example 1 | Dual | x | 3 hr | 0.05 | 3.06 g/cm$^2$ | 0.19 | 7.14 g/cm$^2$ | 2.33 |
| Comparative Example 2 | Dual | x | 3 hr | 0.05 | 8.16 g/cm$^2$ | 0.19 | 2.04 g/cm$^2$ | 0.25 |
| Comparative Example 3 | Single | x | 3 hr | - | | 0.12 | 10.2 g/cm$^2$ | - |
| Comparative Example 4 | Single | x | 3 hr | 0.12 | 10.2 g/cm$^2$ | - | | - |
| Comparative Example 5 | Single | x | 3 hr | The anode included both the first and second artificial graphite types, and the weight ratio of $SiO_2$ (10 wt%) to the total content of the first and second artificial graphite types (86.3 wt%) was 0.12. | | | | - |
| Comparative Example 6 | Dual | O | 3 hr | 0.11 | 7.14 g/cm$^2$ | 0.12 | 3.06 g/cm$^2$ | 0.43 |
| Comparative Example 7 | Dual | x | 1hr | 0.11 | 7.14 g/cm$^2$ | 0.12 | 3.06 g/cm$^2$ | 0.43 |
| Comparative Example 8 | Dual | x | 3 hr | Identical to Example 1, except that the types of the first and second artificial graphite were reversed. | | | | 1 |

**Experimental Example**

Manufacture of lithium secondary battery

Using the anodes fabricated in the examples and comparative examples described above, secondary batteries were manufactured as follows.

A cathode slurry was prepared by mixing Li[Ni$_{0.88}$Co$_{0.1}$Mn$_{0.02}$]O$_2$ as a cathode active material, carbon black as a conductive material, and polyvinylidene fluoride (PVdF) as a binder in a weight ratio of 96.5:2:1.5. The cathode slurry was coated on an aluminum foil having a thickness of 12 $\mu$m, and then dried and roll-pressed to fabricate a cathode.

The cathode and anode were notched into a predetermined size, and a separator (polyethylene, thickness: 13 $\mu$m) was interposed between the cathode and anode to form an electrode unit. The tab portions of the cathode and anode were welded, respectively, and the electrode units were stacked repeatedly to form an electrode assembly.

The electrode assembly was placed into a pouch, and three sides of the pouch were sealed, leaving one side open for electrolyte injection. At this time, the portion having the electrode tab was included in the sealed part.

A 1.1 M LiPF$_6$ solution was prepared using a mixed solvent of EC/EMC (25/75 volume ratio), and an electrolyte was prepared by adding 8 wt% of fluoroethylene carbonate (FEC), 0.5 wt% of 1,3-propene sultone (PRS), and 1.0 wt% of 1,3-propane sultone (PS) to the 1.1 M LiPF$_6$ solution.

The electrolyte was injected into the pouch through the electrolyte injection side, and the remaining electrolyte injection side was also sealed. The electrode assembly was then immersed in the electrolyte for 12 hours or more.

Then, the battery was subjected to heat-press pre-charging for 60 minutes at an average current of 0.5C, followed by stabilization for 12 hours or more

Subsequently, degassing was performed, and the battery was aged for 24 hours or more. Thereafter, formation charging and discharging were performed (charging conditions: CC-CV, 0.25C, 4.2 V, 0.05C, cut-off; discharging conditions: CC, 0.25C, 2.5 V, cut-off).

Subsequently, standard charging and discharging were performed (charging conditions: CC-CV, 0.33C, 4.2 V, 0.05C, cut-off; discharging conditions: CC, 0.33C, 2.5 V, cut-off).

Experimental Example 1: Diffusivity of anode active material layer

1) Diffusivity (D) of anode active material layer

The anodes fabricated in the above-described examples and comparative examples were each cut into a size of 3 mm × 10 mm to produce samples.

These samples were placed under an X-ray microscope (Zeiss Xradia 620 Versa, Zeiss) to capture 3D images of the anode active material layer.

The measurement conditions for the X-ray microscope were as follows.

    i) Source condition: 60 kV, 4.5 W
    ii) Voxel size: 350 nm

The captured 3D images were analyzed using analysis software (GeoDict Software, Math2Market) to obtain 3D modeling images consisting of the anode active material and pore structure.

The diffusivity (D) of the anode active material layer was automatically calculated using the DiffuDict module function included in the 3D image analysis software (GeoDict Software, Math2Market).

Specifically, in the 3D image analysis software settings, the computation direction of the percolation path was set to the Z-direction (thickness direction). Then, the diffusivity was measured based on the thickness, porosity, and average distance traversed by lithium ions in the thickness direction of the anode active material layer in the 3D modeling image.

[Equation 1]

$$\text{Diffusivity of anode active material layer (D)} = P \times \left(\frac{L_t}{L_P}\right)$$

The diffusivity (D) of the anode active material layer was calculated based on the case where a 1 mol/L LiPF$_6$ solution, prepared using a 1:1 volume ratio mixture of ethylene carbonate (EC) and dimethyl carbonate (DMC), was passed through the anode active material layer as the electrolyte.

The physical properties of the electrolyte were as described in *"On tortuosity and the tortuosity factor in flow and diffusion through porous media,"* Chemical Engineering Science, Vol. 44, No. 3, pp. 777-779 (1989*), and were as follows:

    i) Density = 1300 kg/m$^3$

ii) Dynamic viscosity = 0.01 cP

iii) Kinematic viscosity = $7.69231 \times 10^{-6}$ m$^2$/s

2) Diffusivities ($D_1$ and $D_2$) of first and second anode active material layers

For Examples 1 to 4 and Comparative Examples 1, 2, and 6 to 8, which included both the first and second anode active material layers, the diffusivities ($D_1$ and $D_2$) of the first and second anode active material layers were evaluated as follows.

For each anode of the respective examples, the first and second anode active material layers were separated, and the diffusivities ($D_1$ and $D_2$) of the first and second anode active material layers were automatically calculated in the same manner as described in 1) "Diffusivity (D) of anode active material layer."

The results are shown in Table 2 below.

[TABLE 2]

| | Diffusivity (D, %) | Porosity (P, %) | Diffusivity ($D_1$, %) | Diffusivity ($D_2$, %) | Ratio ($D_2/D_1$) |
|---|---|---|---|---|---|
| Example 1 | 5.1 | 25.3 | 4.2 | 6.4 | 1.52 |
| Example 2 | 5.6 | 26.9 | 3.4 | 7.4 | 2.18 |
| Example 3 | 4.6 | 23.6 | 3.67 | 5.64 | 1.54 |
| Example 4 | 5.8 | 29.1 | 3.46 | 8.13 | 2.35 |
| Comparative Example 1 | 4.5 | 24.0 | 4.2 | 4.79 | 1.14 |
| Comparative Example 2 | 6.2 | 29.5 | 2.7 | 7.2 | 2.67 |
| Comparative Example 3 | 6.3 | 27.2 | - | | - |
| Comparative Example 4 | 4.2 | 22.1 | - | | - |
| Comparative Example 5 | 5.2 | 24.5 | - | | - |
| Comparative Example 6 | 5.9 | 27.7 | 4.84 | 6.96 | 1.44 |
| Comparative Example 7 | 3.8 | 21.2 | 2.99 | 4.61 | 1.54 |
| Comparative Example 8 | 4.5 | 25.3 | 6.2 | 4.1 | 0.66 |

Experimental Example 2: Evaluation of output characteristics

The discharge resistance of the secondary batteries according to the examples and comparative examples described above was measured at room temperature (25°C) under a 50% state of charge (SOC) condition at 1C for 10 seconds.

The results are shown in Table 3 below.

Experimental Example 3: Evaluation of fast charge cycle life characteristics

The secondary batteries according to the examples and comparative examples described above were charged to reach a depth of charge (DOD) of 70% within 20 minutes using a stepwise charging method at C-rates of 3.0C / 2.75C / 2.5C / 2.25C / 2.0C / 1.75C / 1.5C / 1.25C / 1.0C / 0.75C / 0.5C, and then discharged at 0.5C. The charging and discharging as described above were regarded as one cycle, and the fast-charge evaluation was performed by repeating the charge and discharge cycles. A 10-minute rest period was provided between each cycle, and the test was repeated for 200 cycles. After 200 cycles, the capacity retention (%) was calculated as the percentage of the discharge capacity at the 200th cycle divided by that at the first cycle.

The results are shown in Table 3 below.

Experimental Example 4: Time from occurrence of micro-short circuit to complete short circuit and maximum internal pressure of secondary battery during thermal runaway

The secondary batteries according to the above-described examples and comparative examples were evaluated as follows.

A cell at 100% state of charge (SOC 100) with a heating pad attached was placed in the chamber of a 1000 L Propagation Autoclave (IR-PC-1000-890H, IREATECH), and a thermal runaway test was performed.

Sensors were connected to the chamber (ambient), heating pad, and cell body, respectively. Starting from room temperature, a power output of 500 W was applied to increase the temperature until cell ignition occurred. The heating pad size was 100 mm $\times$ 90 mm $\times$ 2 mm.

Temperature, voltage, and pressure changes within the cell were measured using the sensors.

A micro-short circuit was defined as the point at which the voltage suddenly dropped to 0.011 V or lower, and a complete short circuit was defined as the point at which the voltage further dropped to 0.5 V or lower after the occurrence of the micro-short circuit.

The maximum internal pressure of the secondary battery was evaluated as the maximum pressure observed during the thermal runaway test.

The results are shown in Table 3.

[TABLE 3]

| | Diffusivity (D, %) | Ratio ($D_2/D_1$) | Discharge DCIR (m$\Omega$) | Fast charge capacity retention (%) | Time from occurrence of micro-short circuit to complete short circuit (s) | Maximum pressure during thermal runaway (bar) |
|---|---|---|---|---|---|---|
| Example 1 | 5.1 | 1.52 | 1.21 | 94.4 | 10.5 | 1.61 |
| Example 2 | 5.6 | 2.17 | 1.14 | 95.5 | 10.0 | 1.75 |
| Example 3 | 4.6 | 1.53 | 1.23 | 94.1 | 11.2 | 1.58 |
| Example 4 | 5.8 | 2.35 | 1.08 | 96.2 | 9.4 | 1.69 |
| Comparative Example 1 | 4.5 | 1.14 | 1.36 | 88 | 10.8 | 1.55 |
| Comparative Example 2 | 6.2 | 2.66 | 1.08 | 96.2 | 7.1 | 1.82 |
| Comparative Example 3 | 6.3 | - | 1.06 | 97.5 | 3.5 | 1.85 |
| Comparative Example 4 | 4.2 | - | 1.52 | 79 | 11.2 | 1.55 |
| Comparative Example 5 | 5.2 | - | 1.30 | 90.2 | 6.5 | 1.65 |
| Comparative Example 6 | 5.9 | 1.44 | 1.10 | 95.8 | 8.2 | 1.78 |
| Comparative Example 7 | 3.8 | 1.54 | 1.25 | 91.5 | 10.8 | 1.61 |
| Comparative Example 8 | 4.5 | 0.66 | 1.6 | 75 | 8.9 | 1.78 |

From Table 3, the secondary batteries manufactured in Examples 1 and 2 achieved low discharge resistance and high fast-charge capacity retention. The time to reach a complete short circuit was 10.0 seconds or longer, and the maximum pressure during thermal runaway was 1.75 bar or lower.

The secondary battery manufactured in Comparative Example 1 exhibited high discharge resistance and low fast-charge capacity retention.

The secondary battery manufactured in Comparative Example 2 exhibited a short time to reach a complete short circuit of 7.1 seconds, and the maximum pressure during thermal runaway was 1.82 bar, which was higher.

The secondary battery manufactured in Comparative Example 3 exhibited a very short time to reach a complete short circuit of 3.5 seconds, and the maximum pressure during thermal runaway was the highest, at 1.85 bar.

The secondary battery manufactured in Comparative Example 4 exhibited high discharge resistance and significantly reduced fast-charge capacity retention.

The secondary battery according to Comparative Example 5 exhibited high discharge resistance, and the time to reach a complete short circuit was too short, at 6.5 seconds.

The secondary battery according to Comparative Example 6 exhibited a short time to reach a complete short circuit of 8.2 seconds, and the maximum pressure during thermal runaway was 1.78 bar, which was higher than that in the examples.

The secondary battery according to Comparative Example 7 exhibited high discharge resistance and low fast-charge capacity retention.

The secondary battery according to Comparative Example 8 exhibited the highest discharge resistance, the lowest fast-charge capacity retention, a shorter time to reach a complete short circuit and a higher maximum pressure during thermal runaway than in the examples.

**Claims**

1. An anode for a lithium secondary battery comprising:

   an anode current collector(110); and
   an anode active material layer disposed on at least one surface of the anode current collector(110),
   wherein the anode active material layer comprises a first anode active material layer(120) and a second anode active material layer(130) disposed on the first anode active material layer(120), and
   wherein the diffusivity (D) of the entire anode active material layer obtained through X-ray microscopy (XRM) analysis is 4.6% to 5.8%.

2. The anode for a lithium secondary battery according to claim 1, wherein the diffusivity (D) is defined by Equation 1 below:

   [Equation 1]

   $$\text{Diffusivity (D) of anode active material layer} = P \times \left(\frac{L_t}{L_P}\right)$$

   (in Equation 1, P denotes the porosity of the anode active material layer, $L_t$ denotes the thickness of the anode active material layer, and $L_p$ denotes the average flow path length through which lithium ions pass when permeating the anode active material layer in the thickness direction).

3. The anode for a lithium secondary battery according to claims 1 or 2, wherein the ratio of the diffusivity ($D_2$) of the second anode active material layer(130) to the diffusivity ($D_1$) of the first anode active material layer(120) is 1.50 or more.

4. The anode for a lithium secondary battery according to claim 3, wherein $D_1$ is 2.0% or more, and $D_2$ is 4.0% or more.

5. The anode for a lithium secondary battery according to any one of claims 1 to 4, wherein the porosity of the first anode active material layer(120) is smaller than the porosity of the second anode active material layer(130).

6. The anode for a lithium secondary battery according to claim 5, wherein the ratio of the porosity of the second anode active material layer(130) to the porosity of the first anode active material layer(120) is 1.35 to 1.45.

7. The anode for a lithium secondary battery according to claims 5 or 6, wherein the porosity of the first anode active material layer(120) is 15% to 20%, and the porosity of the second anode active material layer(130) is 24% to 30%.

8. The anode for a lithium secondary battery according to any one of claims 1 to 7, wherein the ratio of the loading amount of the second anode active material layer(130) to the loading amount of the first anode active material layer(120) is 0.4 to 1.0.

9. The anode for a lithium secondary battery according to any one of claims 1 to 8, wherein the first anode active material layer(120) includes a first anode active material and the second anode active material layer(130) includes a second anode active material, and the first anode active material comprises first artificial graphite in the form of single particles, and the second anode active material comprises second artificial graphite formed by agglomeration of a plurality of sub-particles.

10. The anode for a lithium secondary battery according to claim 9, wherein the first anode active material further comprises a first silicon-based active material, and the second anode active material further comprises a second silicon-based active material, and
    wherein the first and second silicon-based active materials are selected from the group consisting of Si, $SiOx$ ($0<x\leq2$), metal-doped $SiOx$ ($0<x\leq2$), and a silicon-carbon composite.

11. The anode for a lithium secondary battery according to claim 10, wherein the content of the first artificial graphite is 85% by weight to 95% by weight and the content of the first silicon-based active material is 1% by weight to 10% by weight, based on the total weight of the first anode active material.

12. The anode for a lithium secondary battery according to claims 10 or 11, wherein the content of the second artificial graphite is 80% by weight to 95% by weight and the content of the second silicon-based active material is 5% by weight to 20% by weight, based on the total weight of the second anode active material.

13. The anode for a lithium secondary battery according to any one of claims 10 to 12, wherein the weight ratio of the first silicon-based active material to the first artificial graphite is 0.05 to 0.15.

14. The anode for a lithium secondary battery according to any one of claims 10 to 13, wherein the weight ratio of the second silicon-based active material to the second artificial graphite is 0.06 to 0.2.

15. A lithium secondary battery comprising:

the anode(100) according to any one of claims 1 to 14; and
a cathode(150) disposed opposite to the anode(100).

[FIG. 1]

[FIG. 2]

[FIG. 3]

Europäisches
Patentamt
European
Patent Office
Office européen
des brevets

**EUROPEAN SEARCH REPORT**

Application Number

EP 25 22 0787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/161628 A1 (YAO ADRIAN [US]) 21 May 2020 (2020-05-21) * claim 1 * ----- | 1-15 | INV. H01M4/133 H01M4/134 H01M4/36 |
| A | CN 117 999 666 A (PANASONIC IP MAN CO LTD) 7 May 2024 (2024-05-07) * paragraphs [0099] - [0102] * ----- | 1-15 | H01M4/38 H01M4/50 H01M4/587 H01M10/052 |
| A | EP 4 266 397 A1 (SAMSUNG SDI CO LTD [KR]) 25 October 2023 (2023-10-25) * paragraphs [0086] - [0089], [0097] - [0099] * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 20 April 2026 | Martín Fernández, A |

EPO FORM 1503 03.82 (P04C01)

## ANNEX TO THE EUROPEAN SEARCH REPORT
## ON EUROPEAN PATENT APPLICATION NO.

EP 25 22 0787

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| US 2020161628 | A1 | 21-05-2020 | CN | 113544874 A | 22-10-2021 |
| | | | TW | 202036961 A | 01-10-2020 |
| | | | US | 2020161628 A1 | 21-05-2020 |
| | | | WO | 2020102653 A1 | 22-05-2020 |
| CN 117999666 | A | 07-05-2024 | CN | 117999666 A | 07-05-2024 |
| | | | EP | 4411867 A1 | 07-08-2024 |
| | | | JP | WO2023054096 A1 | 06-04-2023 |
| | | | US | 2024405219 A1 | 05-12-2024 |
| | | | WO | 2023054096 A1 | 06-04-2023 |
| EP 4266397 | A1 | 25-10-2023 | EP | 4266397 A1 | 25-10-2023 |
| | | | JP | 2024515948 A | 11-04-2024 |
| | | | KR | 20230030409 A | 06-03-2023 |
| | | | US | 2024120461 A1 | 11-04-2024 |
| | | | US | 20260074187 A1 | 12-03-2026 |
| | | | WO | 2023027431 A1 | 02-03-2023 |

For more details about this annex : see Official Journal of the European Patent Office, No. 12/82

EP 4 760 801 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- On tortuosity and the tortuosity factor in flow and diffusion through porous media. *Chemical Engineering Science*, 1989, vol. 44 (3), 777-779